(19) Europäisches Patentamt
European Patent Office
Office européen des brevets

(11) Veröffentlichungsnummer: **0 038 548**
**A2**

(12) **EUROPÄISCHE PATENTANMELDUNG**

(21) Anmeldenummer: **81102981.8**

(22) Anmeldetag: **17.04.81**

(51) Int. Cl.³: **C 09 B 57/04**
**C 09 B 67/10**

(30) Priorität: **21.04.80 US 141838**
**25.04.80 US 143571**

(43) Veröffentlichungstag der Anmeldung:
**28.10.81 Patentblatt 81/43**

(84) Benannte Vertragsstaaten:
**CH DE FR GB LI**

(71) Anmelder: **Mobay Chemical Corporation**
**Penn Lincoln Parkway West**
**Pittsburgh, Pennsylvania 15205(US)**

(72) Erfinder: **Lerner, Lawrence Robert**
**176 Grove Terrace**
**Livingston New Jersey 07039(US)**

(72) Erfinder: **Shannon, Charles Ehlers**
**88 Elbert Court**
**Ramsey New Jersey 07446(US)**

(72) Erfinder: **Santimauro, Francis**
**731 Birchwood Drive**
**Wyckoff New Jersey 07481(US)**

(74) Vertreter: **Gremm, Joachim, Dr. et al,**
**Bayer AG c/o Zentralbereich Patente, Marken und Lizenzen Bayerwerk**
**D-5090 Leverkusen(DE)**

(54) **Verfahren zur Konditionierung von organischen Pigmenten.**

(57) Verfahren zur Konditionierung organischer Pigmente, dadurch gekennzeichnet, daß man ein Rohpigment der Formel

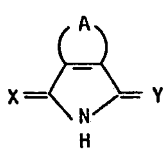

(1)

in der
X, Y Rest einer Barbitursäure oder eines Barbitursäurederivats und
A die restlichen Glieder eines Benzol-, 1,2- Naphthalin-, 2,3-Naphthalin-, Dithian-, Pyridin- oder Pyrazin-Ringes bezeichnen, wobei die genannten Ringe substituiert sein können,

in wäßriger Aufschlämmung, die im wesentlichen frei von organischen Lösungsmitteln ist, im wesentlichen in Abwesenheit von Scherkräften auf eine Temperatur von etwa 110°C bis etwa 175°C, gegebenenfalls in Anwesenheit einer oberflächenaktiven Verbindung, erwärmt und man danach das Pigment isoliert.

EP 0 038 548 A2

Croydon Printing Company Ltd.

Mobay Chemical Corporation
Dyes and Pigments Division

Hawthorne, New Jersey 07507
USA

# Verfahren zur Konditionierung von organischen Pigmenten

Die Erfindung betrifft ein Verfahren zur Konditionierung organischer Pigmente zur Erzielung verbesserter technologischer und färberischer Eigenschaften.

Das neue Verfahren ist dadurch gekennzeichnet, daß man ein Rohpigment der Formel

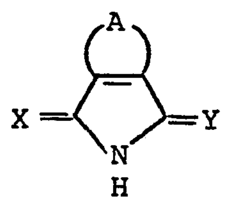

(I)

in der

X, Y Reste einer Barbitursäure oder eines Barbitursäurederivats und

A die restlichen Glieder eines Benzol-, 1,2-Naphthalin-, 2,3-Naphthalin-, Dithian-, Pyridin- oder Pyrazin-Ringes, wobei die genannten Ringe substituiert sein können,

bezeichnen in wäßriger Aufschlämmung, die im wesentlichen frei von organischen Lösungsmitteln ist,

im wesentlichen in Abwesenheit von Scherkräften auf eine Temperatur von etwa 110°C bis etwa 175°C, gegebenenfalls in Gegenwart einer oberflächenaktiven Verbindung, erwärmt und man danach das Pigment isoliert.

Die durch A geschlossenen Ringe können z.B. durch Halogen, $C_1$-$C_{10}$-Alkyl, Phenyl, Carbamoyl, ($C_1$-$C_{10}$-Alkyl)-carbonylamino, Benzoylamino, $C_1$-$C_4$-Alkoxy und/oder Phenoxy substituiert sein; bevorzugt Substituenten sind Halogen, Phenyl und $C_1$-$C_4$-Alkoxy.

Die Barbitursäurederivate X und/oder Y sind z.B. N-($C_1$-$C_{10}$-Alkyl)- oder N,N'-(Di-$C_1$-$C_{10}$-Alkyl)-barbitursäure, vorzugsweise N-($C_1$-$C_4$-Alkyl)- und N,N'-(Di-$C_1$-$C_4$-Alkyl)-barbitursäure wie N-Methylbarbitursäure, N,N'-Dimethylbarbitursäure, N-Ethylbarbitursäure, N,N'-Diethylbarbitursäure oder N,N'-Diphenylbarbitursäure, 2-Thiobarbitursäure und 1-Iminobarbitursäure.

Vorzugsweise werden nach dem erfindungsgemäßen Verfahren Rohpigmente der Formel

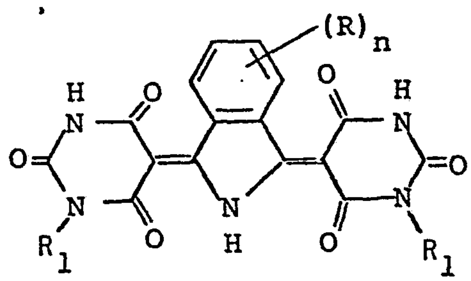

(II)

in der

R für Wasserstoff, $C_1$-$C_4$-Alkyl, Phenyl, Brom, Chlor ($C_1$-$C_4$-Alkyl)-carbonylamino, Benzoylamino, Phenoxy oder $C_1$-$C_4$-Alkoxy steht, und

n 0, 1 oder 2 ist und

$R_1$ Wasserstoff, $C_1$-$C_4$-Alkyl oder Phenyl bezeichnet, kondensiert.

Vorzugsweise setzt man Rohpigmente mit einer mittleren Größe der Primärteilchen unterhalb 0,8 µm oder von vorzugsweise 0,7 µm oder darunter wie 0,1 µm ein.

Die Herstellung der Pigmente, die als Ausgangsmaterial beim erfindungsgemäßen Verfahren dienen, d.h. der Rohpigmente der Formel (I), ist bekannt, z.B. aus DE-AS 1 012 406, DE-OS 2 041 999 und US-PS 4 166 179.

In diesem Zusammenhang sei insbesondere auf DE-AS 1 012 406, Beispiel 5, DE-OS 2 041 999, Beispiele 1-7 und US-PS 4 166 179, Beispiele 1-20 verwiesen.

Vorzugsweise werden solche Rohpigmente der Formel (I) eingesetzt, die durch Kondensation einer Verbindung der Formeln

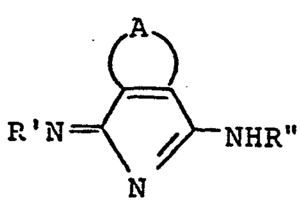

III a

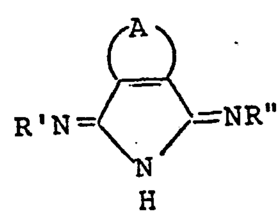

III b

in denen

A die zu Formel (I) angegebene Bedeutung hat und

R', R" Wasserstoff, $C_1$-$C_4$-Alkyl oder Phenyl bezeichnen,

mit Barbitursäure oder einem Barbitursäurederivat in Wasser in Gegenwart einer Carbon-, Sulfon- oder Mineralsäure bei einem pH-Wert von etwa 1-6 und bei 20°C bis 150°C erhalten worden sind.

Die zur Erzielung der wäßrigen Aufschlämmung dem Pigment zugesetzte Wassermenge ist abhängig von der gewünschten Zähigkeit. Im allgemeinen verwendet man pro Gewichtsteil Pigment oder Pigmentpreßkuchen etwa 10 bis etwa 30 Gewichtsteile Wasser.

Je nach den gewünschten Pigmenteigenschaften kann die Erwärmungszeit in weiten Grenzen variiert werden. Vorzugsweise erwärmt man etwa 1 h bis etwa 16 h, besonders bevorzugt etwa 1 h bis etwa 8 h. Die Behandlungstemperatur beträgt bevorzugt etwa 120°C bis etwa 150°C.

Als oberflächenaktive Verbindungen setzt man in das erfindungsgemäße Verfahren übliche nicht-ionogene, kationische und anionische Verbindungen ein wie Alkali- und Erdalkalisalze von Alkylbenzolsulfonsäuren, Alkylphenolsulfonsäuren, Alkylnaphthalinsulfonsäuren und partiell sulfonierten Polystyrole, Alkalisalze wasserlöslicher Kondensationsprodukte aus Naphthalinmonosulfonsäuren

oder deren Alkylderivaten und Formaldehyd, Alkalisalze wasserlöslicher Kondensationsprodukte aus Phenolsulfonsäuren, Formaldehyd und Harnstoff, Ligninsulfonate, Addukte von Ethylenoxid und/oder Propylenoxid an Alkanole, Alkandiole, Phenole, Carbonsäuren, Amine und Carbonsäureamide, weiterhin mit Wasser quellbare und wasserlösliche Polymere, z.B. Vinylpyrrolidonpolymere und Copolymere wasserlöslicher Monomere z.B. N-Vinylpyrrolidon, Acrylamid oder Acrylsäure mit wasserunlöslichen Monomeren wie Acrylnitril, Methylacrylat, Vinylacetat, Vinylchlorid oder Styrol und Polyvinylalkohol. Auch Gemische verschiedener oberflächenaktiver Substanzen sind einsetzbar.

Besonders bevorzugte oberflächenaktive Verbindungen sind die Alkalisalze von Alkylbenzolsulfonsäuren, Alkylphenolsulfonsäuren und Alkylnaphthalinsulfonsäuren, die Alkalisalze von Kondensationsprodukten aus Phenolsulfonsäuren, Formaldehyd und Harnstoff sowie Addukte von Propylenoxid und/oder Ethylenoxid mit Ethylenglykol, 1,3-Propandiol und Ethylendiamin.

Die eingesetzte Menge der oberflächenaktiven Verbindung kann innerhalb weiter Grenzen schwanken. Vorzugsweise verwendet man 1-150 Gew.-%, besonders bevorzugt 5-100 Gew.-% bezogen auf das Pigmentgewicht.

Die in das erfindungsgemäße Verfahren eingesetzte wäßrige Pigmentaufschlämmung ist im wesentlichen frei von organischen Lösungsmitteln, insbesondere frei von Ethylenglykol; sie kann jedoch wechselnde anorganische oder organischer Säuren wie aliphatische Carbonsäuren, insbesondere Essigsäure oder Ameisensäure, aromatische Carbonsäuren oder aliphatischen Sulfonsäuren, die z.B. bei der Herstellung des Rohpigments als Kondensationshilfsmittel eingesetzt werden, enthalten.

Die Konditionierung des Pigments der Formel

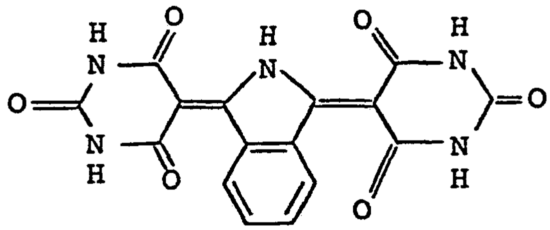

(IV)

wird vorzugsweise in folgender Weise ausgeführt.

Ein wäßriger Preßkuchen (1 Gewichtsteil trockenes Pigment), der z.B. durch Kondensation von 1-Amino-3-imino-isoindolenin und Barbitursäure im Molverhältnis 1:2 in Wasser in Gegenwart von Essigsäure gemäß den Verfahren der DE-AS 1 012 406 oder in Gegenwart von Eisessig nach dem Verfahren der DE-AS 2 041 999 und Wasserwäsche des Reaktionsproduktes erhalten wird, wird mit 10 bis 30 Gewichtsteilen Wasser vermengt. Das Gemisch wird vorzugsweise unter Rühren im Autoklaven 1-16 h auf 120°C bis 150°C erhitzt. Die Suspension wird in üblicher Weise z.B. durch Abkühlen, Filtrieren, Wasserwäsche und Trocknung bei erhöhter Temperatur aufgearbeitet.

Das erfindungsgemäße Konditionierungsverfahren ergibt Pigmente mit weichem Korn, hoher Deckkraft und guten Echtheitseigenschaften, wie Wasser-, Licht- und Lösungsmittelechtheit. Die Pigmente sind temperaturbeständig und in Lacken, Anstrichfarben und Kunststoffen leicht dispergierbar.

Die folgenden Beispiele veranschaulichen die Erfindung.

Beispiel 1

Ein wäßriger Preßkuchen (36,7 Gew.-Teile Pigmenttrockengewicht) des Pigments hergestellt gemäß DE-AS 1 012 406 wird mit kaltem Wasser auf insgesamt 600 Gew.-Teile verdünnt. Das Gemisch wird im Autoklaven auf 145°C erwärmt und bei 140 bis 145°C 2 Stunden gehalten. Die entstehende Suspension wird auf 90°C abgekühlt, filtriert, der Filterrückstand mit kaltem Wasser gewaschen und bei 80°C getrocknet. Das erhaltene Produkt (13,6 Gew.-Teile) ist ein rötlich-gelbes Pigment von weicher Textur.

Beispiel 2

Ein wäßriger Preßkuchen der 36,7 Gew.-Teile Pigment enthält und nach der US-PS 4 166 179, Beispiel 1 hergestellt wurde, wird mit kaltem Wasser auf insgesamt 600 Gew.-Teile verdünnt. Das Gemisch wird im einem Autoklaven auf 135 bis 140°C 5 Stunden unter Rühren erwärmt. Die entstehende Suspension wird auf 90°C abgekühlt, filtriert und der Rückstand mit kaltem Wasser gewaschen und bei 80°C getrocknet. Das Produkt (33 Gew.-Teile) ist hervorragend geeignet für Automobillacke und zur Pigmentierung von Kunststoffen. Es handelt sich um ein rötlich-gelbes Pigment mit hervorragender Lichtechtheit und Beständigkeit gegenüber organischen Lösungsmitteln.

Beispiel 3

Die Arbeitsweise ist die gleiche wie in Beispiel 2, nur

daß man das Erwärmen 5 Stunden bei 125°C vornimmt.

Beispiel 4

Ein wäßriger Preßkuchen des Pigments, das gemäß der US-PS 4 166 179, Beispiel 1 hergestellt wurde und 36,7 Gew.-% trockenes Pigment enthält, wird mit kaltem Wasser zu insgesamt 600 Gew.-Teile aufgeschwemmt. Das Gemisch wird 3 Stunden auf 140°C erhitzt. Die entstandene Suspension wird auf 90°C abgekühlt, filtriert, der Rückstand mit kaltem Wasser gewaschen und bei 80°C getrocknet. Man erhält 35,9 Gew.-Teile eines rötlich-gelben Pigments, das brillante Färbungen ergibt.

Beispiel 5

Ein wäßriger Preßkuchen, der 36,7 Gew.-Teile des Pigments gemäß US-PS 4 166 179, Beispiel 1 enthält, wird mit Wasser auf insgesamt 525 Gew.-Teile verdünnt. Das Gemisch wird auf 145°C erhitzt und bei einer Temperatur von 145°C ± 2°C 16 Stunden lang gehalten. Die entstandene Suspension wird abgekühlt, filtriert und der Rückstand mit kaltem Wasser gewaschen. Nach dem Trocknen bei 60°C erhält man 26,2 Gew.-Teile eines rötlichgelben Pigments, das ausgezeichnete Deckkraft und hervorragende Lichtlösungsmittel- und Hochtemperaturechtheiten aufweist.

Arheitet man nach dem Verfahren der Beispiele 1 oder 2, setzt jedoch die nach der DE-OS 2 041 999 Beispiele 1 bis 7 oder nach der US-PS 4 166 179, Beispiel 2 bis 20

erhaltenen Rohpigmente ein, so erhält man ebenfalls konditionierte Pigmente mit hervorragenden Eigenschaften.

Patentansprüche

1. Verfahren zur Konditionierung organischer Pigmente, dadurch gekennzeichnet, daß man ein Rohpigment der Formel

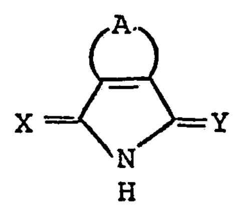

(I)

in der

X, Y Reste einer Barbitursäure oder eines Barbitursäurederivats und

A die restlichen Glieder eines Benzol-, 1,2-Naphthalin-, 2,3-Naphthalin-, Dithian-, Pyridin- oder Pyrazin-Ringes bezeichnen, wobei die genannten Ringe substituiert sein können,

in wäßriger Aufschlämmung, die im wesentlichen frei von organischen Lösungsmitteln ist, im wesentlichen in Abwesenheit von Scherkräften auf eine Temperatur von etwa 110°C bis etwa 175°C, gegebenenfalls in Anwesenheit einer oberflächenaktiven Verbindung, erwärmt und man danach das Pigment isoliert.

2. Verfahren gemäß Anspruch 1, dadurch gekennzeichnet, daß man Rohpigmente der Formel

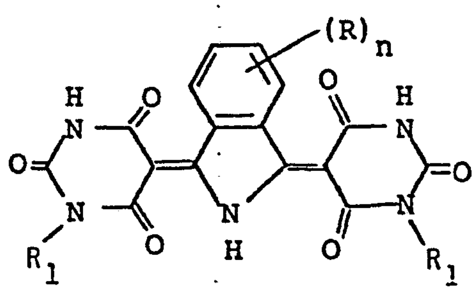

(II)

in der

R für Wasserstoff, $C_1$-$C_4$-Alkyl, Phenyl, Brom, Chlor, ($C_1$-$C_4$-Alkyl)-carbonylamino, Benzoylamino, Phenoxy oder $C_1$-$C_4$-Alkoxy stehen, und

n 0, 1 oder 2 ist und

$R_1$ Wasserstoff, $C_1$-$C_4$-Alkyl oder Phenyl bezeichnet,

einsetzt.

3. Verfahren gemäß Anspruch 1, dadurch gekennzeichnet, daß man als Rohpigment

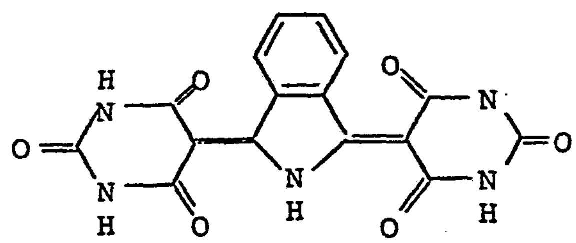

(IV)

einsetzt.

4. Verfahren gemäß den Ansprüchen 1-3, dadurch gekennzeichnet, daß man solche Rohpigmente der Formel (I) gemäß Anspruch 1 einsetzt, die durch Kondensation einer Verbindung der Formeln

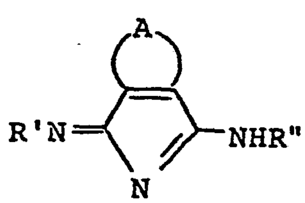

(IIIa)

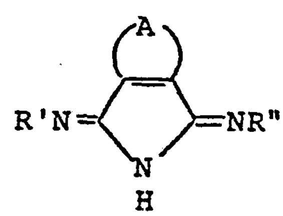

(IIIb)

in denen

A die in Formel (I) angegebene Bedeutung hat und

R', R" Wasserstoff, $C_1$-$C_4$-Alkyl oder Phenyl bezeichnen,

mit Barbitursäure oder einem Barbitursäurederivat in Wasser in Gegenwart einer Carbon-, Sulfon- oder Mineralsäure bei einem pH-Wert von etwa 1-6 und bei 20°C - 150°C erhalten worden sind.

5. Verfahren gemäß den Ansprüchen 1-4, dadurch gekennzeichnet, daß das eingesetzte Rohpigment eine mittlere Teilchengröße der Primärpartikel unter 0,8 µm aufweist.

6. Verfahren gemäß den Ansprüchen 1-5, dadurch gekennzeichnet, daß die Konditionierungszeit etwa 1-16 h beträgt.

7. Verfahren gemäß den Ansprüchen 1-6, dadurch gekennzeichnet, daß man auf etwa 120-150°C erwärmt.

8. Verfahren gemäß den Ansprüchen 1-7, dadurch gekennzeichnet, daß die wäßrige Aufschlämmung pro Gewichtsteil Pigment etwa 10-30 Gewichtsteile Wasser enthält.

9. Konditionierung von

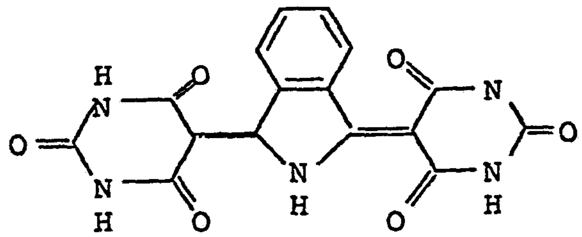

(IV

gemäß Anspruch 1, dadurch gekennzeichnet, daß man pro Gewichtsteil Pigment etwa 10-30 Gewichtsteile Wasser in der wäßrigen Aufschlämmung einsetzt und man bei etwa 120-150°C gegebenenfalls unter Rühren konditioniert.